# EUROPEAN PATENT SPECIFICATION

(11) **EP 3 029 821 B1**
(45) Date of publication and mention of the grant of the patent: **30.06.2021**
(21) Application number: 14831328.1
(22) Date of filing: 10.07.2014
(51) Int. Cl.: H02M 7/48, H02M 7/5387

(54) **SEMICONDUCTOR DEVICE AND POWER CONVERSION DEVICE**
HALBLEITERBAUELEMENT UND STROMUMWANDLUNGSVORRICHTUNG
DISPOSITIF SEMI-CONDUCTEUR ET DISPOSITIF DE CONVERSION D'ÉNERGIE

(30) Priority: 02.08.2013 JP 2013161017
(43) Date of publication of application: 08.06.2016
(73) Proprietor: Panasonic Intellectual Property Management Co., Ltd., Osaka-shi, Osaka 540-6207 (JP)
(72) Inventor: GOTO, Shusaku, Osaka-shi, Osaka 540-6207 (JP); IWAMATSU, Yusuke, Osaka-shi, Osaka 540-6207 (JP); TERASAWA, Akira, Osaka-shi, Osaka 540-6207 (JP); IHIRA, Yasuhisa, Osaka-shi, Osaka 540-6207 (JP)
(74) Representative: Appelt, Christian W.
(86) International application number: PCT/JP2014/003678
(87) International publication number: WO 2015/015721

(56) References cited:
- EP-A2- 1 369 985
- WO-A1-2012/132127
- CN-U- 202 309 553
- DE-A1-102011 081 111
- JP-A- 2009 089 541
- JP-A- 2010 532 148
- JP-A- 2012 228 035
- JP-A- 2013 074 634
- US-B2- 7 046 534
- None

## Description

### Technical Field

The invention relates generally to semiconductor devices and power conversion devices and, more particularly, to a semiconductor device including an inverter circuit and a clamping circuit, and a power conversion device including the semiconductor device.

### Background Art

There has so far been a semiconductor device configured as an inverter circuit for DC-AC conversion. The inverter circuit is used for a general-purpose power conversion device configured to drive a motor or the like, a power conversion device configured as a UPS (uninterruptible power supply), and a power conversion device such as a power conditioner configured to connect a distributed power supply to a grid.

The inverter circuit is formed of switching devices in a bridge configuration in general. For example, there is a semiconductor device configured as a three-phase inverter that includes six switching devices in a bridge configuration, housed in one package (e.g., JP Patent No. 3212791 (hereinafter referred to as "Document 1")).

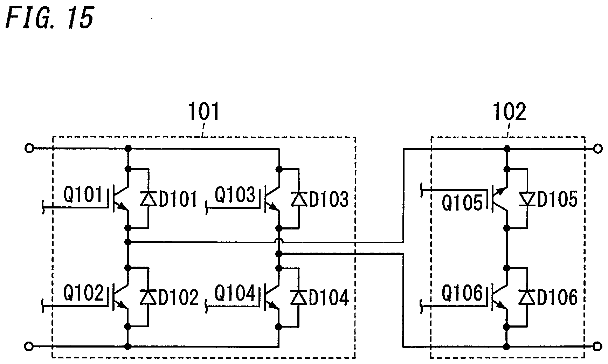

FIG. 15 shows a circuit configuration in which a clamping circuit 102 is provided next to an inverter circuit 101.

The inverter circuit 101 includes switching devices Q101-Q104 and diodes D101-D104. The switching devices Q101-Q104 are connected in a full bridge configuration. The diodes D101-D104 are one-to-one connected in inverse parallel with the switching devices Q101-Q104.

The clamping circuit 102 includes switching devices Q105 and Q106 and diodes D105 and D106. The switching devices Q105 and Q106 are connected in series between output ends of the inverter circuit 101. The diodes D105 and D106 are one-to-one connected in inverse parallel with the switching devices Q105 and Q106.

A semiconductor device module (an inverter module) has been provided so far, in which components constituting an inverter circuit 101 are housed in one package. However, every conventional semiconductor device module is not configured such that a clamping circuit 102 is formed of components (switching devices and diodes) in proper quantities. The conventional clamping circuit 102 was accordingly formed by two methods below.

In a first method, discrete devices are used as components constituting the clamping circuit 102. In this case, the components need to be made correction to the influence of dispersion in component characteristics and temperature, but it is difficult to manage every component temperature. In addition, mounting the discrete devices on a substrate requires complicated conductive pattern formation on the substrate.

In a second method, a semiconductor device module such as, e.g., Document 1 is used as components constituting the clamping circuit 102. In this case, the problems in the first method can be solved. Such a conventional semiconductor device module is however provided for not a dedicated circuit for a clamping circuit but a general-purpose circuit for an inverter circuit for example. Forming a clamping circuit with such a conventional semiconductor device module therefore causes a disadvantage to cost because unused components remain in the semiconductor device module.

The first and second methods also have a common issue caused by comparatively long current paths (wires, conductive lines on a substrate and the like) connecting between an inverter circuit 101 and a clamping circuit 102. This therefore causes large impedance in current paths between the inverter circuit 101 and the clamping circuit 102 and a large ohmic loss thereof, as well as voltage fluctuation by inductance component of the current paths and the occurrence of noise.

DE 10 2011 081111 A1 describes an inverter arrangement for use in photovoltaic systems for converting a DC voltage into a three-phase AC voltage. The inverter arrangement comprises three half-bridges each with a high-side semiconductor switch and a low-voltage semiconductor switch and a control device designed to switch the semiconductor switch so that a conversion of a DC voltage applied to the inverter arrangement into a three-phase alternating voltage is effected Space vector modulators can be used in which one of the semiconductor switches of a half-bridge is switched off and the other semiconductor switch of the half-bridge is switched off; wherein the inverter arrangement further comprises a short-circuiting device for short-circuiting the alternating voltage-side output lines of the inverter arrangement, and wherein the control device is configured to replace a switching condition by means of a switching state in the case of the space vector modulating switching conditions in which all of the highside semiconductor switches are connected or all low-voltage semiconductor switches are connected, in which both the high-side semiconductor switches as well as the low-voltage semiconductor switches are switched off, and at the same time the short-circuiting device is switched.

### Summary of Invention

The present invention relates to a semiconductor device according to independent claim 1 and to a power conversion device according to claim 8. Preferred embodiments are described in the dependent claims. The present invention has been achieved in view of the above circumstances, and an object thereof is to provide a semiconductor device with a superior cost performance, capable of shortening current paths between an inverter circuit and a clamping circuit to suppress the occurrence of losses, voltage fluctuation and noise in the current paths.

A semiconductor device of the present invention includes an inverter circuit, conductive paths and a clamping circuit. The inverter circuit includes first switching devices in a full bridge configuration and is configured to convert a DC voltage into an AC voltage to be output, by turning the first switching devices on and off. The conductive paths are formed of electrical conductors connected to output ends of the inverter circuit. The clamping circuit includes second switching devices and is connected to the conductive paths wherein the second switching devices turn on, thereby conducting across the conductive paths. The inverter circuit, the conductive paths and the clamping circuit are housed in one package. A reference electrical potential corresponding to a drive voltage of at least one first switching device of the first switching devices and reference electrical potential corresponding to a drive voltage of at least one second switching device of the second switching devices are connected via the conductive paths, when a common drive power supply is provided for the first switching devices and the second switching devices, each of the conductive paths is set to a length such that each drive voltage for the first switching devices and the second switching devices is a predetermined maximum drive voltage or less and such that occurrence of losses in the conductive paths is suppressed at a switching frequency of the inverter circuit.

A power conversion device of the invention includes the semiconductor device of the invention, and a driver circuit configured to drive the first and second switching devices of the semiconductor device.

### Brief Description of Drawings

FIG. 1 is a circuit diagram of a semiconductor device in an embodiment;
FIG. 2 is a circuit diagram of a power conversion device in the embodiment;
FIG. 3 is an illustrative operational diagram of components of the power conversion device in the embodiment;
FIG. 4 is an illustrative operational diagram of components of the power conversion device in the embodiment;
FIG. 5 is a circuit diagram showing a passage of a current Ion in the embodiment;
FIG. 6 is a circuit diagram showing a passage of a return current Ir in the embodiment;
FIG. 7 is a circuit diagram of a configuration example of a drive power supply for switching devices in the embodiment;
FIGS. 8A and 8B show kinds of losses which occur in the switching devices and diodes in the embodiment;
FIG. 9 is a circuit diagram of a clamping circuit having another configuration in the embodiment;
FIG. 10 is a circuit diagram of an inverter circuit having another configuration in the embodiment;
FIG. 11 is a circuit diagram of a clamping circuit having a configuration in the embodiment;
FIG. 12 is a circuit diagram of a clamping circuit having a configuration in the embodiment;
FIG. 13 is a circuit diagram of a clamping circuit having a configuration in the embodiment;
FIG. 14 is a circuit diagram of a clamping circuit having a configuration in the embodiment; and
FIG. 15 is a circuit diagram showing a conventional configuration.

### Description of Embodiments

Embodiments of the invention will be hereinafter explained with reference to the drawings.

### (EMBODIMENT)

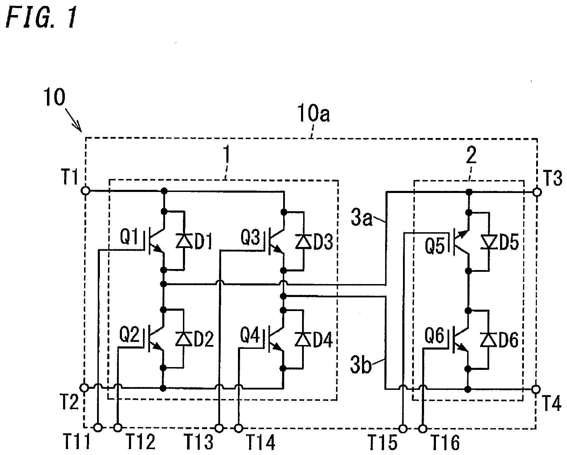

FIG. 1 shows an example of a circuit configuration of a semiconductor device 10 in the embodiment. The semiconductor device 10 includes an inverter circuit 1, a clamping circuit 2 and conductive paths 3a and 3b. The clamping circuit 2 is provided next to the inverter circuit 1 via the conductive paths 3a and 3b. The semiconductor device 10 further includes DC terminals T1 and T2, AC terminals T3 and T4, and drive terminals T11-T16.

In the semiconductor device 10, components (switching devices, diodes and the like) constituting the inverter circuit 1 and the clamping circuit 2 are mounted on a substrate (not shown), which are housed in one package 10a. That is, the semiconductor device 10 is a module including the inverter circuit 1 and the clamping circuit 2. Electrical conductors formed on the substrate constitute electrical conductive lines (including the conductive paths 3a and 3b) connecting the components.

The inverter circuit 1 includes four switching devices Q1-Q4 (first switching devices) and four diodes D1-D4 (first diodes).

Each of the switching devices Q1-Q4 is formed of an IGBT (Insulated Gate Bipolar Transistor). A series circuit of the switching devices Q1 and Q2 and a series circuit of the switching devices Q3 and Q4 are connected between the DC terminals T1 and T2. A collector of the switching device Q1 is connected to the DC terminal T1. An emitter of the switching device Q1 is connected to a collector of the switching device Q2. An emitter of the switching device Q2 is connected to the DC terminal T2. A collector of the switching device Q3 is connected to the DC terminal T1. An emitter of the switching device Q3 is connected to a collector of the switching device Q4. An emitter of the switching device Q4 is connected to the DC terminal T2. That is, the switching devices Q1-Q4 are connected in a full bridge configuration between the DC terminals T1 and T2. A junction of the switching devices Q1 and Q2 and a junction of the switching devices Q3 and Q4 correspond to output ends of the inverter circuit 1.

The diodes D1-D4 are one-to-one connected in inverse parallel with the switching devices Q1-Q4.

A first end of the conductive path 3a is connected to the junction of the switching devices Q1 and Q2, and a second end of the conductive path 3a is connected to the AC terminal T3. A first end of the conductive path 3b is connected to the junction of the switching devices Q3 and Q4, and a second end of the conductive path 3b is connected to the AC terminal T4.

The clamping circuit 2 includes switching devices Q5 and Q6 (second switching devices) and diodes D5 and D6 (second diodes). Each of the switching devices Q5 and Q6 is formed of an IGBT. A series circuit of the switching devices Q5 and Q6 is connected across the conductive paths 3a and 3b. An emitter of the switching device Q5 is connected to the conductive path 3a. A collector of the switching device Q5 is connected to a collector of the switching device Q6. An emitter of the switching device Q6 is connected to the conductive path 3b. The diodes D5 and D6 are one-to-one connected in inverse parallel with the switching devices Q5 and Q6.

Gates of the switching devices Q1-Q6 are one-to-one connected to the drive terminals T11-T16. The switching devices Q1-Q6 are configured to turn on and off in accordance with respective drive signals supplied from the drive terminals T11-T16.

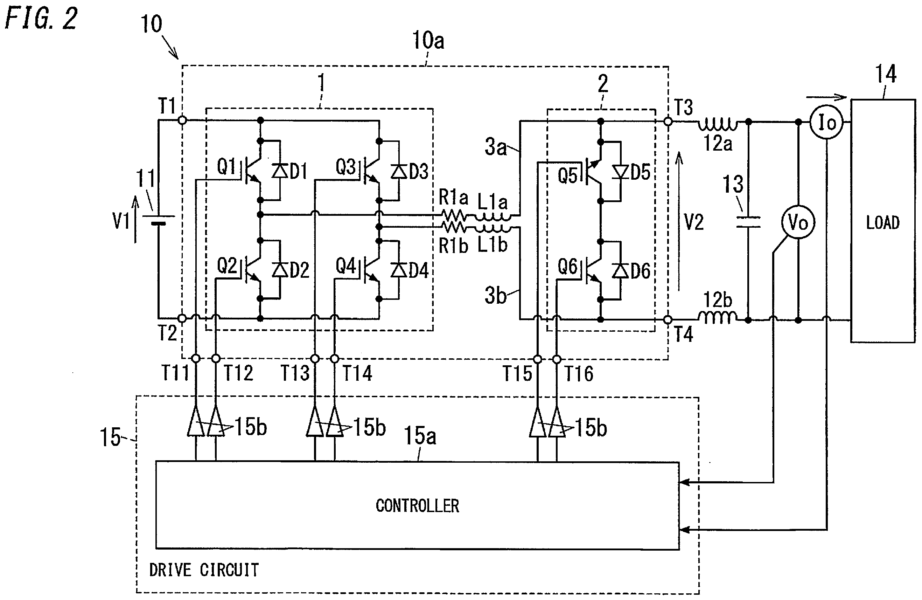

FIG. 2 shows a configuration of a power conversion device with the semiconductor device 10.

The DC terminals T1 and T2 of the semiconductor device 10 are connected to a DC power supply 11 configured to output a DC voltage V1 (e.g., DC320V). The AC terminal T3 of the semiconductor device 10 is connected with a first end of a reactor 12a. The AC terminal T4 is connected with a first end of a reactor 12b. A capacitor 13 is connected between second ends of the reactors 12a and 12b. A voltage (an output voltage Vo) across the capacitor 13 is to be applied across a load 14.

A driver circuit 15 has a function for driving the switching devices Q1-Q6. The driver circuit 15 is formed of a controller 15a and six drivers 15b. The six drivers 15b are one-to-one connected to the switching devices Q1-Q6. The controller 15a is configured to supply control signals corresponding one-to-one to the switching devices Q1-Q6 to the drivers 15b connected to the switching devices corresponding to the control signals, based on the output voltage Vo applied across the load 14 and an output current Io supplied to the load 14. Each control signal is a signal for turning on and off a corresponding switching device. Each of the six drivers 15b is configured to generate a drive signal for turning on and off a switching device connected to, in accordance with a control signal supplied from the controller 15a. Each of the six drivers 15b is also configured to supply its own drive signal to a gate of a switching device connected to, via a drive terminal, one-to-one connected to the switching device connected thereto, of the drive terminals T11-T16.

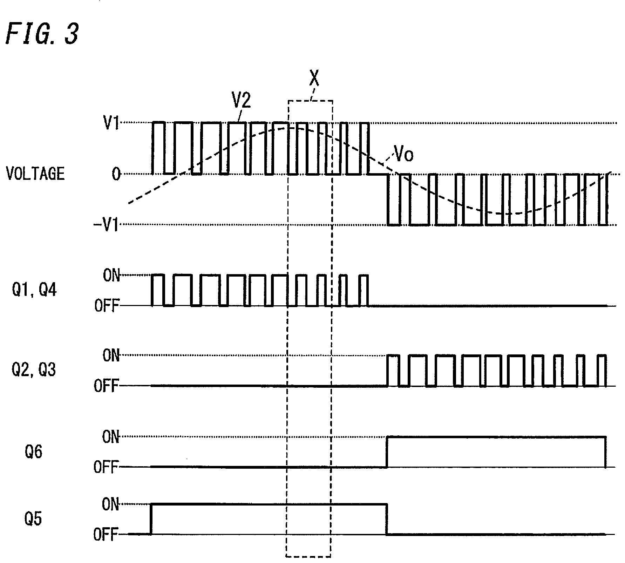

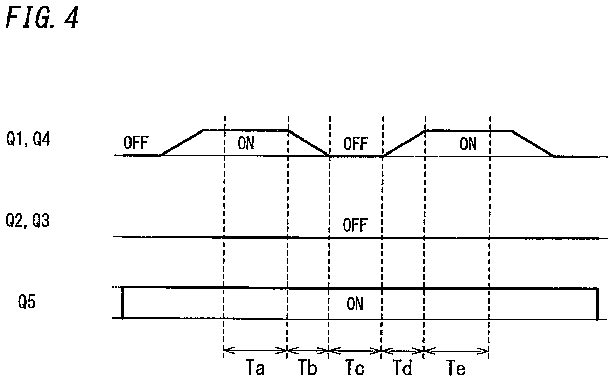

An operation of the power conversion device is now explained with reference to FIGS. 3 and 4.

FIG. 3 shows operations by components of the power conversion device for one period of the output voltage Vo (50Hz/60Hz). When the load 14 is connected to a commercial power grid, the output voltage Vo is to be output in synchronization with a phase and amplitude of a grid voltage.

First, the switching devices Q1 and Q4 repeatedly turn on and off to perform a PWM (Pulse Width Modulation) operation, while the switching device Q5 is in on-state and the switching devices Q2, Q3 and Q6 are in off-state. The output voltage Vo is thus adjusted to a positive half-cycle waveform. The switching devices Q2 and Q3 repeatedly turn on and off to perform a PWM operation, while the switching device Q6 is in on-state and the switching devices Q1, Q4 and Q5 are in off-state. The output voltage Vo is thus adjusted to a negative half-cycle waveform.

An AC voltage (an alternating voltage) V2 across the AC terminals T3 and T4 can have three values of "VI", "0" and "-V1" in response to the operation of the inverter circuit 1. On the other hand, in a general inverter of a bipolar drive type, values that an AC voltage V2 can have are two values. In the embodiment, since the AC voltage V2 can have the three values, it is possible to decrease an amplitude value (an absolute value) of the AC voltage V2 in comparison with the case of the two values if the outputs are the same as each other. Power efficiency of the circuit can be therefore increased because switching losses of the switching devices Q1-Q4 and iron losses of the reactors 12a and 12b are reduced.

FIG. 4 is an enlarged view of operations in a range X in FIG. 3 (part of the positive half-cycle).

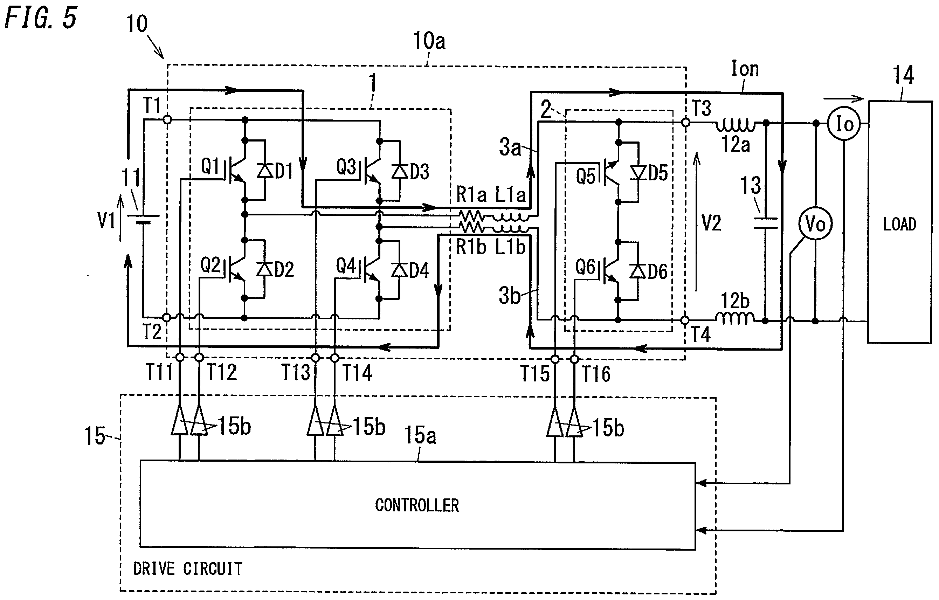

For a time period Ta, the switching devices Q1 and Q4 are in on-state, the switching devices Q2 and Q3 are in off-state, the switching device Q5 is in on-state, and the switching device Q6 is in off-state. For the time period Ta, a current (an electric current) Ion (see FIG. 5) flows through a passage of a positive electrode of the DC power supply 11, the switching device Q1, the conductive path 3a, the reactor 12a, the capacitor 13, the reactor 12b, the conductive path 3b, the switching device Q4 and the negative electrode of the DC power supply 11. The current Ion flows from the collectors to the emitters of the switching devices Q1 and Q4, and therefore on-resistance losses occur in the switching devices Q1 and Q4. On the other hand, no current flows through the diodes D1-D4. The amplitude of the AC voltage V2 for the time period Ta is "V1".

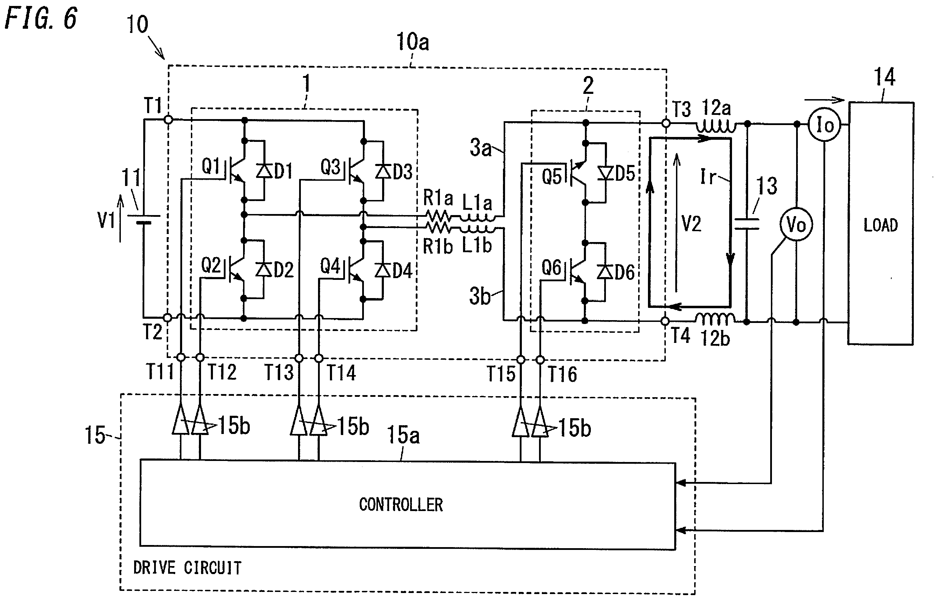

The switching devices Q1 and Q4 are then turned off for a time period Tb. When the switching devices Q1 and Q4 are turned off, collector-emitter voltages of the switching devices Q1 and Q4 change from "about 0" to "V1/2", and a current flowing through the switching devices Q1 and Q4 changes from "Ion" to "0". Switching losses therefore occur in the switching devices Q1 and Q4 when they are turn off. A return current Ir (see FIG. 6) starts flowing through the diode D6 and the switching device Q5 because respective energy stored in the reactors 12a and 12b are discharged.

The return current Ir then flows through the diode D6 and the switching device Q5 for a time period Tc. On-resistance losses therefore occur in the diode D6 and the switching device Q5.

The switching devices Q1 and Q4 are then turned on for a time period Td. When the switching devices Q1 and Q4 are turned on, collector-emitter voltages of the switching devices Q1 and Q4 change from "V1/2" to "about 0", and a current flowing through the switching devices Q1 and Q4 changes from "0" to "Ion". Switching losses therefore occur in the switching devices Q1 and Q4 when they are turned on. A reverse recovery loss (a recovery loss) occurs because of a change from a forward bias to a reverse bias in the diode D6.

The switching devices Q1 and Q4 are then in on-state for a time period Te, and an operation in the same way as that for the time period Ta is performed.

The current flowing via the conductive paths 3a and 3b has a discontinuous current waveform because it is "0" when the return current Ir occurs and it is the current Ion when the return current Ir does not occur. That is, the current flows through the conductive paths 3a and 3b and has a PWM frequency (a switching frequency) of the switching devices Q1 and Q4 and the switching devices Q2 and Q3.

Note that the losses P1 in the conductive paths 3a and 3b is given by P1=Ip²·Rp, where Rp is a resistance value of resistance components R1a and R1b and Ip is the output current of the inverter circuit 1. A voltage drop Va with respect to the conductive paths 3a and 3b is given by Va=Ip · Rp + Lp {*∂* Ip/ *∂* t}, where Lp is an inductance value of inductance components L1a and L1b.

In Fig. 2, emitter electrical potential of the switching device Q1 (reference electrical potential of the drive voltage) is connected with emitter electrical potential of the switching device Q5 (reference electrical potential of the drive voltage) via the conductive path 3a. That is, the emitter of the switching device Q1 is connected with the emitter electrical potential of the switching device Q5 via the conductive path 3a. Emitter electrical potential of the switching device Q3 (reference electrical potential of the drive voltage) is connected with emitter electrical potential of the switching device Q6 (reference electrical potential of the drive voltage) via the conductive path 3b. That is, the emitter of the switching device Q3 is connected with the emitter electrical potential of the switching device Q6 via the conductive path 3b. The voltage drops by the conductive paths 3a and 3b can be suppressed by a reduction in the resistance components R1a and R1b and the inductance components L1a and L1b of the conductive paths 3a and 3b. A common drive power supply for the switching devices Q1 and Q5 is possible and a common drive power supply for the switching devices Q3 and Q6 is possible. A simple drive power supply for the switching devices can be configured accordingly.

In the case where each of the switching devices Q1 to Q6 is formed of an IGBT, the drive voltage corresponds to "emitter electrical potential of IGBT" when the switching devices Q1 to Q6 are turned off. The drive voltage corresponds to about "emitter electrical potential of IGBT + 10V" when the switching devices Q1 to Q6 are turned on.

A gate-emitter maximum drive voltage of each of the switching devices Q1 to Q6 is predetermined. However, a drive voltage applied to the gates of the switching devices exceeds the maximum drive voltage when a common drive power supply is used for the switching devices because differences in respective emitter electrical potential of the switching devices occur by the voltage drops caused by respective impedance of the conductive paths. It is now assumed that the conductive path 3a is a long path and has large impedance. In this case, if a common drive power supply is used for the switching devices Q1 and Q5, a drive voltage of the switching device Q5 may exceed the maximum drive voltage because the emitter electrical potential of the switching device Q5 may decrease according to a voltage drop caused by the impedance of the conductive path 3a. It is also assumed that the conductive path 3b is a long path and has large impedance. In this case, if a common drive power supply is used for the switching devices Q3 and Q6, a drive voltage of the switching device Q6 may exceed the maximum drive voltage because the emitter electrical potential of the switching device Q6 may decrease according to a voltage drop caused by the impedance of the conductive path 3b.

In the embodiment, since the inverter circuit 1, the conductive paths 3a and 3b and the clamping circuit 2 are housed in the one package 10a, the conductive paths 3a and 3b can be shortened, and voltage drops by the conductive paths 3a and 3b can be suppressed. It is therefore possible to realize a common drive power supply for the switching devices Q1 and Q5 and a common drive power supply for the switching devices Q3 and Q6.

That is, the conductive path 3a is set to a length capable of suppressing the occurrence of a loss of the conductive path 3a under a PWM frequency of the switching devices (e.g., a voltage drop by the current Ion) so that the drive voltages of the switching devices Q1 and Q5 are the predetermined maximum drive voltage or less. The conductive path 3b is also set to a length capable of suppressing the occurrence of a loss of the conductive path 3b under the PWM frequency of the switching devices (e.g., a voltage drop by the current Ion) so that the drive voltages of the switching devices Q3 and Q6 are the predetermined maximum drive voltage or less.

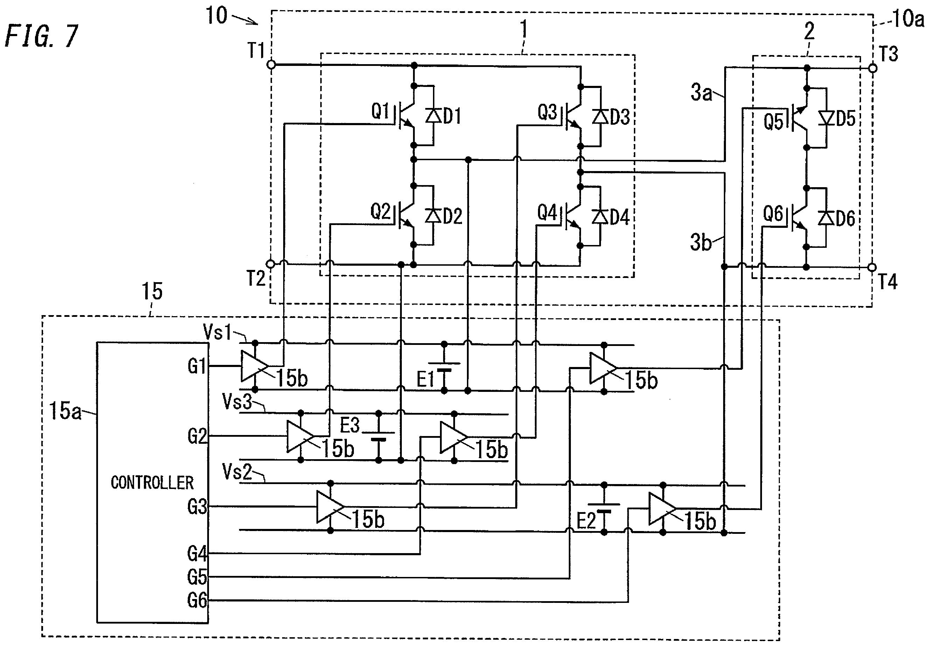

FIG. 7 shows a configuration example of a drive power supply for the switching devices Q1 to Q6. The respective drivers 15b for the switching devices Q1 and Q5 are configured to generate respective drive signals from a voltage Vs1 of a drive power supply E1. The drive power supply is common to the switching devices Q1 and Q5. The respective drivers 15b for the switching devices Q3 and Q6 are configured to generate respective drive signals from a voltage Vs2 of a drive power supply E2. The drive power supply is common to the switching devices Q3 and Q6.

The switching devices Q2 and Q4 have common emitter electrical potential (reference electrical potential of the drive voltage). The respective drivers 15b for the switching devices Q2 and Q4 are configured to generate respective drive signals from a voltage Vs3 of a drive power supply E3. The drive power supply is common to the switching devices Q2 and Q4.

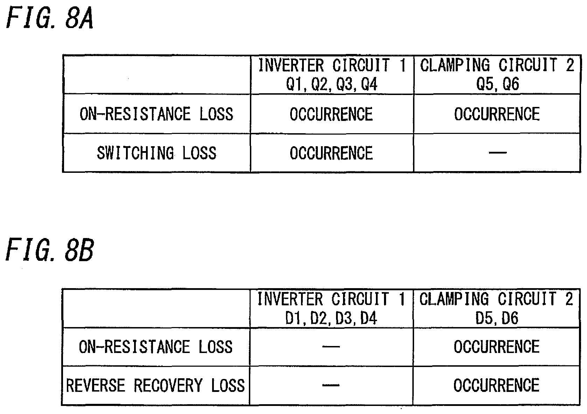

FIG. 8A shows kinds of losses which occur in the switching devices in the inverter circuit 1 and the clamping circuit 2. FIG. 8B shows kinds of losses which occur in the diodes in the inverter circuit 1 and the clamping circuit 2.

The switching devices Q1 to Q4 in the inverter circuit 1 generate both respective on-resistance losses and respective switching losses, and accordingly requires both reduction in respective collector-emitter voltages and increase in speed of respective switching. Little current flows through each of the diodes D1 to D4 in the inverter circuit 1, and the on-resistance losses and reverse recovery losses scarcely occur.

The switching devices Q5 and Q6 of the clamping circuit 2 generate respective on-resistance losses but scarcely generate respective switching losses. Reduction in the collector-emitter voltages is prioritized than increase in speed of the switching. A return current Ir flows through the diodes D5 and D6 of the clamping circuit 2, and the on-resistance losses and the reverse recovery losses occur, which requires characteristics of both reduction in the forward voltages and reduction in the reverse recovery times.

It is therefore desirable that the switching devices Q1 to Q4 be devices capable of faster switching than the switching devices Q5 and Q6. Preferably the switching devices Q5 and Q6 are devices having low collector-emitter voltage. In this case, the circuit loss of the semiconductor device 10 can be reduced, whereby power efficiency of the circuit can be increased. The switching devices Q5 and Q6 can be formed of inexpensive devices, and accordingly the cost can be reduced.

Preferably the diodes D5 and D6 have respective smaller losses for reverse recovery (recovery) than those of the diodes D1 to D4. In this case, the reverse recovery losses of the diodes D5 and D6 are reduced, whereby power efficiency of the circuit can be increased. The reverse recovery (recovery) of a diode is a phenomenon that when the diode changes from forward-bias state to reverse-bias state, a reverse current flows from the cathode to the anode thereof in order to charge capacity of the junction thereof.

Preferably the diodes D5 and D6 have respective lower forward voltages than those of the diodes D1 to D4. In this case, the diodes D5 and D6 have a small on-resistance loss and improved power efficiency of the circuit. The diodes D1 to D4 can be formed of inexpensive devices, and cost reduction can be achieved accordingly.

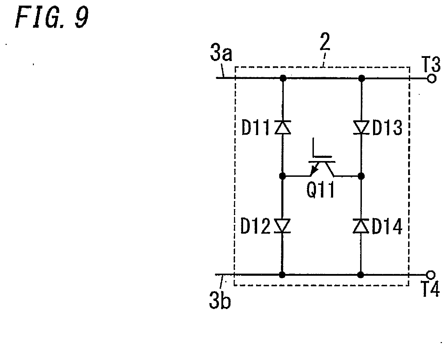

FIG. 9 shows another configuration of clamping circuit 2. The clamping circuit 2 shown in FIG. 9 includes a series circuit of a diode D11 (a second diode), a cathode of which is connected to the conductive path 3a, and a diode D12 (a second diode), a cathode of which is connected to the conductive path 3b. The clamping circuit 2 further includes a series circuit of a diode D13 (a second diode), an anode of which is connected to the conductive path 3a, and a diode D14 (a second diode), an anode of which is connected to the conductive path 3b. The clamping circuit 2 further includes a switching device Q11 (a first switching device) that is formed of an IGBT and connected between a junction of the diodes D11 and D12 and a junction of the diodes D13 and D14. When the switching device Q11 is turned on, a return current Ir is allowed to flow through the clamping circuit 2. In this case, the return current Ir is to flow through two diodes (the diodes D11 and D14, or the diodes D12 and D13), and therefore devices having a lower forward voltage can be used for the diodes D11 to D14 effectively.

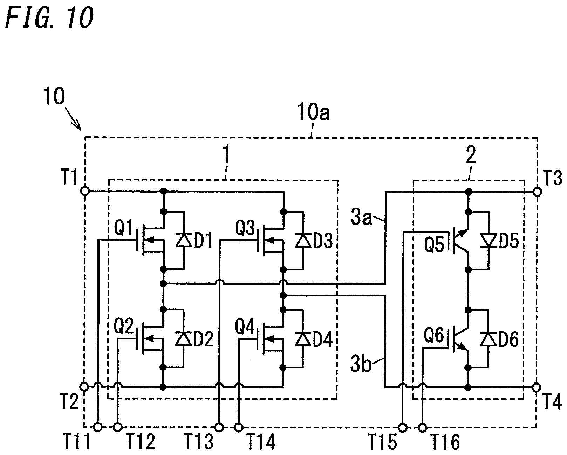

As shown in FIG. 10, preferably each of the switching devices Q1 to Q4 is formed of a wide-gap semiconductor. With the switching devices Q1 to Q4 formed of wide-gap semiconductors, each on-resistance loss thereof can be reduced by 20 to 50%, and each switching loss can be reduced by 60 to 75%, in comparison with the case of silicon material. As a result, loss reduction and high efficiency can be achieved. Examples of such a wide-gap semiconductor include silicon carbide (SiC), gallium nitride (GaN) and the like.

Each of the switching devices Q1 to Q4 may be a MOSFET (Metal-Oxide-Semiconductor Field-Effect Transistor). With the switching devices Q1 to Q4 formed of MOSFETs, a switching frequency therefor can be increased easily and the reactors 12a and 12b can be reduced in size. In addition, the diodes D1 to D4 have respective parasitic diodes and therefore the number of components can be reduced.

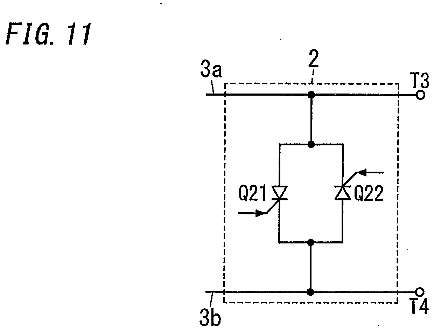

As shown in FIG. 11, a clamping circuit 2 may be formed of switching devices Q21 and Q22 (second switching devices) which are connected in parallel with each other in opposite directions and each of which is formed of a thyristor or a GTO (a Gate Turn Off thyristor). In the case with no diode, a loss can be reduced, in comparison with the case where the clamping circuit 2 is formed of the IGBTs (see FIG. 1), by the forward voltages of the diodes D5 and D6. The clamping circuit 2 can be provided with switching devices that are devices having a comparatively slow switching speed, such as thyristors or GTOs because it does not require a fast switching speed. The clamping circuit 2 is thus formed of thyristors or GTOs, whereby cost reduction and a greater capacity can be made.

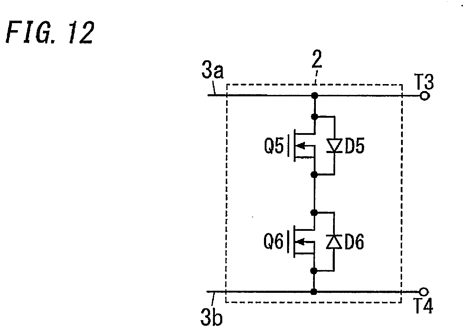

As shown in FIG. 12, a clamping circuit 2 may be formed of switching devices Q5 and Q6 that are MOSFETs. They have lower on-resistance in general, and accordingly on-resistance losses thereof can be suppressed in comparison with the case where the switching devices Q5 and Q6 are the IGBTs (see FIG. 1). Efficiency can be improved in a small range of current capacity in particular. In case diodes D5 and D6 are parasitic diodes of the MOSFETs (the switching devices Q5 and Q6), they may have a comparatively large reverse recovery loss. Discrete diode devices may be accordingly added as the diodes D5 and D6.

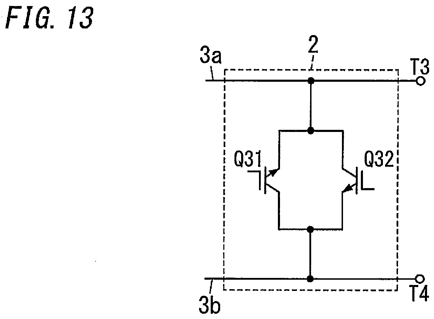

As shown in FIG. 13, a clamping circuit 2 may be formed of switching devices Q31 and Q32 (second switching devices) that are reverse blocking IGBTs. The clamping circuit 2 of FIG. 13 is provided across the conductive paths 3a and 3b where a collector of the switching device Q31 is connected to an emitter of the switching device Q32 and a collector of the switching device Q32 is connected to an emitter of the switching device Q31. In this case, diodes D5 and D6 for reverse withstand voltage are unnecessary in comparison with the clamping circuit 2 of FIG. 1. As a result of reduction in number of devices, size and cost thereof can be reduced.

When the clamping circuit 2 of FIG. 1 conducts, a voltage across both ends of the clamping circuit 2 is a sum (about 3V) of an on-voltage of a switching device and a forward voltage of a diode. On the other hand, when the clamping circuit 2 of FIG. 13 conducts, a voltage across both ends of the clamping circuit 2 is only an on-voltage (about 1.5V) of a switching device, and on-resistance loss thereof can be reduced.

Each of the switching devices Q5 and Q6 of the clamping circuit 2 may be a wide-gap semiconductor. With the switching devices Q5 and Q6 formed of wide-gap semiconductors, reverse recovery losses thereof can be reduced by 80% or more in comparison with the case of silicon material. As a result, loss reduction and high efficiency can be achieved.

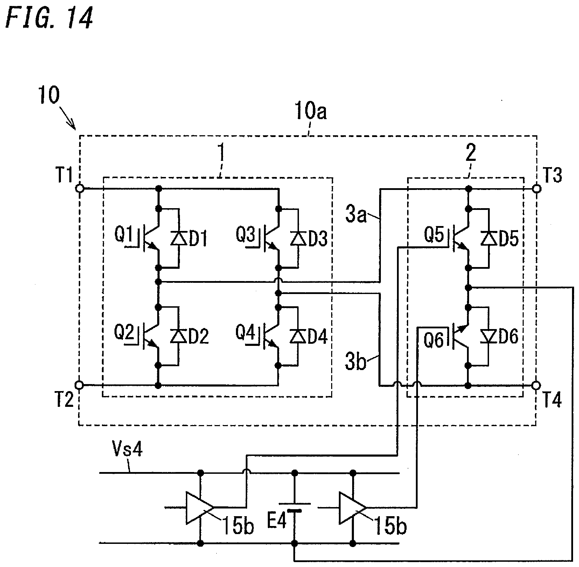

The switching devices Q5 and Q6 of the clamping circuit 2 may be connected as shown in FIG. 14. In this case, the collector of the switching device Q5 is connected to the conductive path 3a, the emitter of the switching device Q5 is connected to the emitter of the switching device Q6, and the collector of the switching device Q6 is connected to the conductive path 3b. The diodes D5 and D6 are one-to-one connected in reverse parallel with the switching devices Q5 and Q6.

That is, the switching devices Q5 and Q6 of the clamping circuit 2 in FIG. 14 have a common emitter electrical potential (reference electrical potential of a drive voltage). Respective drivers 15b that are one-to-one connected to the switching devices Q5 and Q6 are configured to generate respective drive signals from a voltage Vs4 of a drive power supply E4 that is provided as a common drive power supply for the switching devices Q5 and Q6. The semiconductor device 10 can be therefore reduced in size and cost. In the semiconductor device 10, the inverter circuit 1, the conductive paths 3a and 3b, and the clamping circuit 2 are housed in the one package 10a, and respective lengths of the conductive paths 3a and 3b are shortened, thereby facilitating the drive power supply being shared by the switching devices.

The semiconductor device 10 may have a converter function configured to perform conversion of alternating current supplied between the AC terminals T3 and T4 into direct current to output the direct current from the DC terminals T1 and T2. That is, it may be configured to switch between a first operation (an inverter operation) for allowing the semiconductor device 10 to convert a DC voltage V1 into an AC voltage V2 to be output and a second operation (a converter operation) for allowing the semiconductor device 10 to convert an AC voltage V2 into a DC voltage V1 to be output. When the semiconductor device 10 operates as a converter, the switching devices Q1 to Q6 are controlled almost in the same way as the operation of the inverter shown as FIG. 3, and a transmission direction of electric power is a reverse direction thereof. Such a transmission direction of electric power is automatically decided based on a magnitude correlation between the DC voltage V1 across the DC terminals T1 and T2 and the AC voltage V2 across the AC terminals T3 and T4. As a result, switch between the inverter operation and the converter operation can be performed smoothly. The DC power supply 11 is formed of a battery, thereby enabling discharge and charge control of the battery.

### (SHORT STATEMENT)

As explained above, the semiconductor device 10 in the embodiment includes switching devices Q1 to Q4 (first switching devices) in a full bridge configuration. The semiconductor device 10 includes the inverter circuit 1, the conductive paths 3a and 3b, and the clamping circuit. The inverter circuit 1 is configured to convert a DC voltage into an AC voltage to be output by turning the switching devices Q1 to Q4 on and off. The conductive paths 3a and 3b are formed of electrical conductors connected to output ends of the inverter circuit 1. The clamping circuit 2 includes the switching devices Q5 and Q6 (second switching devices) and is connected to the conductive paths 3a and 3b wherein the switching devices Q5 and Q6 turn on, thereby conducting across the conductive paths. The inverter circuit 1, the conductive paths 3a and 3b, and the clamping circuit 2 are housed in the one package.

With this configuration of the semiconductor device 10, since the inverter circuit 1, the conductive paths 3a and 3b, and the clamping circuit 2 are housed in the one package, respective lengths of the conductive paths formed between the inverter circuit 1 and the clamping circuit 2 can be shortened. Respective impedance of the conductive paths 3a and 3b can be reduced accordingly. Losses caused by respective resistance of conductive lines can be reduced by reduction in resistance components of the conductive paths 3a and 3b. Voltage fluctuation and noise can be suppressed by reduction in inductance components of the conductive paths 3a and 3b. The semiconductor device 10 is a dedicated circuit for the inverter circuit 1 and the clamping circuit 2, and has therefore an advantage in cost because no unused and unwanted device remains.

Thus, in the semiconductor device 10, the current paths between the inverter circuit 1 and the clamping circuit 2 can be shortened, thereby suppressing the occurrence of losses, voltage fluctuation and noise in the current paths. The device with a superior cost performance can be provided.

In the case where a common drive power supply is shared by the switching devices Q1 to Q4 and the switching devices Q5 and Q6 in the semiconductor device 10, preferably the conductive paths 3a and 3b are set to satisfy a prescribed condition below. Each of the conductive paths 3a and 3b is set to a length so that the occurrence of losses in the conductive paths 3a and 3b at switching frequencies of the inverter circuit 1 can be suppressed. The prescribed condition is a condition for setting each drive voltage of the switching devices Q1 to Q4 and the switching devices Q5 and Q6 to a predetermined maximum drive voltage or less. In the common drive power supply, reference electrical potential of a drive voltage of at least one of the switching devices Q1 to Q4 and reference electrical potential of a drive voltage of at least one of the switching devices Q5 and Q6 are connected via the conductive paths 3a and 3b.

With this configuration, the semiconductor device 10 can suppress the occurrence of losses in the conductive paths 3a and 3b.

Preferably the switching devices Q1 to Q4 are devices capable of faster switching than the switching devices Q5 and Q6.

With this configuration, the switching devices Q5 and Q6 can be formed of inexpensive devices, and therefore cost thereof can be reduced.

The semiconductor device 10 may further include: first diodes D1 to D4 that are one-to-one connected in inverse parallel with the switching devices Q1 to Q4; and second diodes D5 and D6 that are one-to-one connected in inverse parallel with the switching devices Q5 and Q6. Preferably the second diodes D5 and D6 have smaller losses during reverse recovery than those of the first diodes D1 to D4.

With this configuration, it is possible to reduce reverse recovery losses in the diodes D5 and D6, thereby improving power efficiency of the circuit.

The semiconductor device 10 may further include: first diodes D1 to D4 that are one-to-one connected in inverse parallel with the switching devices Q1 to Q4; and second diodes D5 and D6 that are one-to-one connected in inverse parallel with the switching devices Q5 and Q6. Preferably the second diodes D5 and D6 have lower forward voltages than those of the first diodes D1 to D4.

With this configuration, the diodes D5 and D6 have a small on-resistance loss, and it is accordingly possible to improve power efficiency of the circuit.

Preferably each of the switching devices Q1 to Q4 is formed of a wide-gap semiconductor.

With this configuration, respective on-resistance losses and switching losses thereof can be reduced in comparison with the case where the switching devices Q1 to Q4 are made of silicon material. As a result, loss reduction and high efficiency can be achieved.

The semiconductor device 10 may further include: first diodes D1 to D4 that are one-to-one connected in inverse parallel with the switching devices Q1 to Q4; and second diodes D5 and D6 that are one-to-one connected in inverse parallel with the second switching devices Q5 and Q6. Preferably each of the second diodes D5 and D6 is formed of a wide-gap semiconductor.

With this configuration, respective reverse recovery losses thereof can be reduced in comparison with the case of silicon material. As a result, loss reduction and high efficiency can be achieved.

A power conversion device in the embodiment includes: a semiconductor device 10 in the embodiment; and a driver circuit 15 configured to drive the switching devices Q1 to Q4 and the switching devices Q5 and Q6 of the semiconductor device 10.

With the power conversion device of this configuration, since the inverter circuit 1, the conductive paths 3a and 3b, and the clamping circuit 2 are housed in the one package, respective lengths of the conductive paths formed between the inverter circuit 1 and the clamping circuit 2 can be shortened. Respective impedance of the conductive paths 3a and 3b can be reduced accordingly. Losses caused by respective resistance of conductive lines can be reduced by reduction in resistance components of the conductive paths 3a and 3b. Voltage fluctuation and noise can be suppressed by reduction in inductance components of the conductive paths 3a and 3b. The semiconductor device 10 is a dedicated circuit for the inverter circuit 1 and the clamping circuit 2, and has therefore an advantage in cost because no unused and unwanted device remains.

Thus, in the power conversion device, the current paths between the inverter circuit 1 and the clamping circuit 2 can be shortened, thereby suppressing the occurrence of losses, voltage fluctuation and noise in the current paths. The device with a superior cost performance can be provided.

Preferably, the clamping circuit 2 includes the switching devices Q5 and Q6, and the driver circuit 15 is configured to drive the switching devices Q5 and Q6 with a common drive power supply.

With this configuration, the semiconductor device 10 of the power conversion device can be reduced in size and cost.

Preferably the driver circuit 15 is configured to drive the switching devices Q1 to Q4 and the switching devices Q5 and Q6 with a common drive power supply.

With the power conversion device of this configuration, the drive power supply for the switching devices Q1 to Q4 and the switching devices Q5 and Q6 can be formed simply.

Preferably it is configured to switch between a first operation for allowing the semiconductor device 10 to convert a DC voltage into an AC voltage to be output and a second operation for allowing the semiconductor device 10 to convert an AC voltage into a DC voltage to be output.

With the power conversion device of this configuration, switch between the inverter operation and the converter operation can be performed smoothly.

## Claims

1. A semiconductor device (10), comprising:
an inverter circuit (1) that comprises first switching devices (Q1-Q4) in a full bridge configuration and is configured to convert a DC voltage into an AC voltage to be output, by turning the first switching devices (Q1-Q4) on and off;
conductive paths (3a, 3b) that are formed of electrical conductors connected to output ends of the inverter circuit (1); and
a clamping circuit (2) that comprises second switching devices (Q5, Q6) and is connected to the conductive paths (3a, 3b) wherein the second switching devices (Q5, Q6) turn on, thereby conducting across the conductive paths (3a, 3b);
the semiconductor device being **characterized in that**
the inverter circuit (1), the conductive paths (3a, 3b) and the clamping circuit (2) are housed in one package (10a);
**in that** reference electrical potential corresponding to a drive voltage of at least one first switching device of the first switching devices (Q1-Q4) and reference electrical potential corresponding to a drive voltage of at least one second switching device of the second switching devices (Q5, Q6) are connected via the conductive paths (3a, 3b), and
**in that** when a common drive power supply (E4) is provided for the first switching devices (Q1-Q4) and the second switching devices (Q5, Q6), each of the conductive paths (3a, 3b) is set to a length such that each drive voltage for the first switching devices (Q1-Q4) and the second switching devices (Q5, Q6) is a predetermined maximum drive voltage or less and such that occurrence of losses in the conductive paths (3a, 3b) is suppressed at a switching frequency of the inverter circuit (1).

2. A semiconductor device (10) of claim 1, wherein
the first switching devices (Q1-Q4) are devices capable of faster switching than the second switching devices (Q5, Q6).

3. A semiconductor device (10) of any one of claims 1 to 2, further comprising:
first diodes (D1-D4) that are one-to-one connected in inverse parallel with the first switching devices (Q1-Q4); and
second diodes (D5, D6) that are one-to-one connected in inverse parallel with the second switching devices (Q5, Q6), wherein
the second diodes (D5, D6) have smaller losses during reverse recovery than those of the first diodes (D1-D4).

4. A semiconductor device (10) of any one of claims 1 to 3, further comprising:
first diodes (D1-D4) that are one-to-one connected in inverse parallel with the first switching devices (Q1-Q4); and
second diodes (D5, D6) that are one-to-one connected in inverse parallel with the second switching devices (Q5, Q6), wherein
the second diodes (D5, D6) have lower forward voltages than those of the first diodes (D1-D4).

5. A semiconductor device (10) of any one of claims 1 to 4, each of the first switching devices (Q1-Q4) is formed of a wide-gap semiconductor.

6. A semiconductor device (10) of any one of claims 1 to 5, further comprising:
first diodes (D1-D4) that are one-to-one connected in inverse parallel with the first switching devices (Q1-Q4); and
second diodes (D5, D6) that are one-to-one connected in inverse parallel with the second switching devices (Q5, Q6), wherein
each of the second diodes (D5, D6) is formed of a wide-gap semiconductor.

7. A semiconductor device (10) of any one of claims 1 to 6, further comprising:
drive terminals (T11-T16) that are one-to-one connected to the first switching devices (Q1-Q4) and the second switching devices (Q5, Q6), and supply drive signals for turning on and off the first switching devices (Q1-Q4) and the second switching devices (Q5, Q6) wherein the package (10a) is provided with the drive terminals (T11-T16).

8. A power conversion device, comprising:
a semiconductor device (10) of any one of claims 1 to 7; and
a driver circuit configured to drive the first and second switching devices (Q5, Q6) of the semiconductor device (10).

9. The power conversion device of claim 8, wherein
the clamping circuit (2) comprises the second switching devices (Q5, Q6), and the driver circuit is configured to drive the second switching devices (Q5, Q6) with a common drive power supply (E4).

10. The power conversion device of claim 8, wherein
the driver circuit is configured to drive the first and second switching devices (Q5, Q6) with a common drive power supply (E4).

11. The power conversion device of any one of claims 8 to 10, configured to switch between a first operation for allowing the semiconductor device (10) to convert a DC voltage into an AC voltage to be output and a second operation for allowing the semiconductor device (10) to convert an AC voltage into a DC voltage to be output.

## Patentansprüche

1. Halbleiterbauelement (10), aufweisend:
eine Wechselrichterschaltung (1), die erste Schaltvorrichtungen (Q1-Q4) in einer Vollbrückenkonfiguration aufweist und konfiguriert ist, um eine Gleichspannung durch Ein- und Ausschalten der ersten Schaltvorrichtungen (Q1-Q4) in eine auszugebende Wechselspannung umzuwandeln;
Leiterbahnen (3a, 3b), die aus elektrischen Leitern gebildet sind, die mit Ausgangsenden der Wechselrichterschaltung (1) verbunden sind; und
eine Klemmschaltung (2), die zweite Schaltvorrichtungen (Q5, Q6) aufweist und mit den Leiterbahnen (3a, 3b) verbunden ist, wobei die zweiten Schaltvorrichtungen (Q5, Q6) einschalten und dadurch über die Leiterbahnen (3a, 3b) leiten; wobei das Halbleiterbauelement **dadurch gekennzeichnet ist, dass**
die Wechselrichterschaltung (1), die Leiterbahnen (3a, 3b) und die Klemmschaltung (2) in einem Paket (10a) untergebracht sind;
dadurch, dass ein elektrisches Bezugspotential, das einer Steuerspannung mindestens einer ersten Schaltvorrichtung der ersten Schaltvorrichtungen (Q1-Q4) entspricht, und ein elektrisches Bezugspotential, das einer Ansteuerspannung mindestens einer zweiten Schaltvorrichtung der zweiten Schaltvorrichtungen (Q5, Q6) entspricht, über die Leiterbahnen (3a, 3b) verbunden sind, und
dadurch, dass, wenn eine gemeinsame Ansteuerstromversorgung (E4) für die ersten Schaltvorrichtungen (Q1-Q4) und die zweiten Schaltvorrichtungen (Q5, Q6) vorgesehen wird, jede der Leiterbahnen (3a, 3b) auf eine solche Länge eingestellt ist, dass jede Ansteuerspannung für die ersten Schaltvorrichtungen (Q1-Q4) und die zweiten Schaltvorrichtungen (Q5, Q6) eine vorbestimmte maximale Ansteuerspannung oder kleiner ist und ein Auftreten von Verlusten in den Leiterbahnen (3a, 3b) bei einer Schaltfrequenz der Wechselrichterschaltung (1) unterdrückt wird.

2. Halbleiterbauelement (10) nach Anspruch 1, wobei die ersten Schaltvorrichtungen (Q1-Q4) Vorrichtungen sind, die in der Lage sind, rascher zu schalten als die zweiten Schaltvorrichtungen (Q5, Q6).

3. Halbleiterbauelement (10) nach einem der Ansprüche 1 bis 2, ferner aufweisend:
erste Dioden (D1-D4), die eins-zu-eins invers parallel mit den ersten Schaltvorrichtungen (Q1-Q4) verbunden sind; und
zweite Dioden (D5, D6), die eins-zu-eins invers parallel mit den zweiten Schaltvorrichtungen (Q5, Q6) verbunden sind, wobei
die zweiten Dioden (D5, D6) während der Sperrverzögerungszeit kleinere Verluste haben als die der ersten Dioden (D1-D4).

4. Halbleiterbauelement (10) nach einem der Ansprüche 1 bis 3, ferner aufweisend:
erste Dioden (D1-D4), die eins-zu-eins invers parallel mit den ersten Schaltvorrichtungen (Q1-Q4) verbunden sind; und
zweite Dioden (D5, D6), die eins-zu-eins invers parallel mit den zweiten Schaltvorrichtungen (Q5, Q6) verbunden sind, wobei
die zweiten Dioden (D5, D6) niedrigere Durchlassspannungen haben als die der ersten Dioden (D1 -D4).

5. Halbleiterbauelement (10) nach einem der Ansprüche 1 bis 4, wobei jede der ersten Schaltvorrichtungen (Q1-Q4) aus einem Wide-Bandgap-Halbleiter gebildet ist.

6. Halbleiterbauelement (10) nach einem der Ansprüche 1 bis 5, ferner aufweisend:
erste Dioden (D1-D4), die eins-zu-eins invers parallel mit den ersten Schaltvorrichtungen (Q1-Q4) verbunden sind; und
zweite Dioden (D5, D6), die eins-zu-eins invers parallel mit den zweiten Schaltvorrichtungen (Q5, Q6) verbunden sind, wobei
jede der zweiten Dioden (D5, D6) aus einem Wide-Bandgap-Halbleiter gebildet ist.

7. Halbleiterbauelement (10) nach einem der Ansprüche 1 bis 6, ferner aufweisend:
Ansteueranschlüsse (T11 - T16), die eins-zu-eins mit den ersten Schaltvorrichtungen (Q1 - Q4) und den zweiten Schaltvorrichtungen (Q5, Q6) verbunden sind und Antriebssignale zum Ein- und Ausschalten der ersten Schaltvorrichtungen (Q1 - Q4) und der zweiten Schaltvorrichtungen (Q5, Q6) liefern, wobei das Paket (10a) mit den Ansteueranschlüssen (T11 - T16) versehen ist.

8. Stromumwandlungsvorrichtung, aufweisend
ein Halbleiterbauelement (10) nach einem der Ansprüche 1 bis 7; und
eine Ansteuerschaltung, die konfiguriert ist, um die ersten und zweiten Schaltvorrichtungen (Q5, Q6) des Halbleiterbauelements (10) anzusteuern.

9. Stromumwandlungsvorrichtung nach Anspruch 8, wobei
die Klemmschaltung (2) die zweiten Schaltvorrichtungen (Q5, Q6) aufweist, und
die Ansteuerschaltung konfiguriert ist, um die zweiten Schaltvorrichtungen (Q5, Q6) mit einer gemeinsamen Ansteuerstromversorgung (E4) anzusteuern.

10. Stromumwandlungsvorrichtung nach Anspruch 8, wobei
die Ansteuerschaltung konfiguriert ist, um die ersten und zweiten Schaltvorrichtungen (Q5, Q6) mit einer gemeinsamen Ansteuerstromversorgung (E4) anzusteuern.

11. Stromumwandlungsvorrichtung nach einem der Ansprüche 8 bis 10, die konfiguriert ist, um zwischen einem ersten Betrieb, der es dem Halbleiterbauelement (10) ermöglicht, eine Gleichspannung in eine auszugebende Wechselspannung umzuwandeln, und einem zweiten Betrieb, der es dem Halbleiterbauelement (10) ermöglicht, eine Wechselspannung in eine auszugebende Gleichspannung umzuwandeln, umzuschalten.

## Revendications

1. Dispositif semi-conducteur (10), comprenant :
un circuit onduleur (1) qui comprend des premiers dispositifs de commutation (Q1-Q4) dans une configuration en pont complet, et qui est configuré de manière à convertir une tension continue en une tension alternative à fournir en sortie, en mettant sous tension et hors tension les premiers dispositifs de commutation (Q1-Q4) ;
des chemins conducteurs (3a, 3b) qui sont formés par des conducteurs électriques connectés à des extrémités de sortie du circuit onduleur (1) ; et
un circuit de fixation de niveau (2) qui comprend des seconds dispositifs de commutation (Q5, Q6), et qui est connecté aux chemins conducteurs (3a, 3b), dans lequel les seconds dispositifs de commutation (Q5, Q6) sont mis sous tension, ce qui permet par conséquent une conduction électrique à travers les chemins conducteurs (3a, 3b) ;
le dispositif semi-conducteur étant **caractérisé en ce que** :
le circuit onduleur (1), les chemins conducteurs (3a, 3b) et le circuit de fixation de niveau (2) sont logés dans un boîtier (10a) ;
**en ce qu'**un potentiel électrique de référence correspondant à une tension d'attaque d'au moins un premier dispositif de commutation des premiers dispositifs de commutation (Q1-Q4) et un potentiel électrique de référence correspondant à une tension d'attaque d'au moins un second dispositif de commutation des seconds dispositifs de commutation (Q5, Q6) sont connectés par l'intermédiaire des chemins conducteurs (3a, 3b) ; et
**en ce que**, lorsqu'une alimentation électrique d'attaque commune (E4) est fournie pour les premiers dispositifs de commutation (Q1-Q4) et les seconds dispositifs de commutation (Q5, Q6), chacun des chemins conducteurs (3a, 3b) est réglé à une longueur telle que chaque tension d'attaque pour les premiers dispositifs de commutation (Q1-Q4) et les seconds dispositifs de commutation (Q5, Q6) correspond à une tension d'attaque maximale prédéterminée, ou moins, et de sorte que l'occurrence de pertes dans les chemins conducteurs (3a, 3b) est supprimée à une fréquence de commutation du circuit onduleur (1).

2. Dispositif semi-conducteur (10) selon la revendication 1, dans lequel :
les premiers dispositifs de commutation (Q1-Q4) sont des dispositifs aptes à fournir une commutation plus rapide que celle des seconds dispositifs de commutation (Q5, Q6).

3. Dispositif semi-conducteur (10) selon l'une quelconque des revendications 1 à 2, comprenant en outre :
des premières diodes (D1-D4) qui sont connectées une à une en parallèle inverse avec les premiers dispositifs de commutation (Q1-Q4) ; et
des secondes diodes (D5, D6) qui sont connectées une à une en parallèle inverse avec les seconds dispositifs de commutation (Q5, Q6), dans lesquelles
les secondes diodes (D5, D6) présentent des pertes plus faibles, pendant une récupération inverse, que celles des premières diodes (D1-D4).

4. Dispositif semi-conducteur (10) selon l'une quelconque des revendications 1 à 3, comprenant en outre :
des premières diodes (D1-D4) qui sont connectées une à une en parallèle inverse avec les premiers dispositifs de commutation (Q1-Q4) ; et
des secondes diodes (D5, D6) qui sont connectées une à une en parallèle inverse avec les seconds dispositifs de commutation (Q5, Q6), dans lesquelles
les secondes diodes (D5, D6) présentent des tensions directes inférieures à celles des premières diodes (D1-D4).

5. Dispositif semi-conducteur (10) selon l'une quelconque des revendications 1 à 4, dans lequel chacun des premiers dispositifs de commutation (Q1-Q4) est formé d'un semi-conducteur à large bande interdite.

6. Dispositif semi-conducteur (10) selon l'une quelconque des revendications 1 à 5, comprenant en outre :
des premières diodes (D1-D4) qui sont connectées une à une en parallèle inverse avec les premiers dispositifs de commutation (Q1-Q4) ; et
des secondes diodes (D5, D6) qui sont connectées une à une en parallèle inverse avec les seconds dispositifs de commutation (Q5, Q6), dans lesquelles
chacune des secondes diodes (D5, D6) est formée par un semi-conducteur à large bande interdite.

7. Dispositif semi-conducteur (10) selon l'une quelconque des revendications 1 à 6, comprenant en outre :
des bornes d'attaque (T11-T16) qui sont connectées une à une aux premiers dispositifs de commutation (Q1-Q4) et aux seconds dispositifs de commutation (Q5, Q6), et qui fournissent des signaux d'attaque pour mettre sous tension et hors tension les premiers dispositifs de commutation (Q1-Q4) et les seconds dispositifs de commutation (Q5, Q6), dans lequel le boîtier (10a) est pourvu des bornes d'attaque (T11-T16).

8. Dispositif de conversion d'énergie, comprenant :
un dispositif semi-conducteur (10) selon l'une quelconque des revendications 1 à 7 ; et
un circuit d'attaque configuré de manière à exciter les premiers et seconds dispositifs de commutation (Q5, Q6) du dispositif semi-conducteur (10).

9. Dispositif de conversion d'énergie selon la revendication 8, dans lequel :
le circuit de fixation de niveau (2) comprend les seconds dispositifs de commutation (Q5, Q6), et le circuit d'attaque est configuré de manière à exciter les seconds dispositifs de commutation (Q5, Q6) avec une alimentation électrique d'attaque commune (E4).

10. Dispositif de conversion d'énergie selon la revendication 8, dans lequel :
le circuit d'attaque est configuré de manière à exciter les premiers et seconds dispositifs de commutation (Q5, Q6) avec une alimentation électrique d'attaque commune (E4).

11. Dispositif de conversion d'énergie selon l'une quelconque des revendications 8 à 10, configuré de manière à commuter entre un premier fonctionnement destiné à permettre au dispositif semi-conducteur (10) de convertir une tension continue en une tension alternative à fournir en sortie, et un second fonctionnement destiné à permettre au dispositif semi-conducteur (10) de convertir une tension alternative en une tension continue à fournir en sortie.
